# EUROPÄISCHE PATENTANMELDUNG

(11) **EP 3 103 616 A1**
(43) Veröffentlichungstag der Anmeldung: **14.12.2016**
(21) Anmeldenummer: 16173674.9
(22) Anmeldetag: 09.06.2016
(51) Int. Cl.: B29C 49/64, B29C 49/06, B29L 31/00

(54) **VORRICHTUNG UND VERFAHREN ZUM HERSTELLEN OVALER KUNSTSTOFFBEHÄLTNISSE**

(30) Priorität: 09.06.2015 DE 102015109091
(71) Anmelder: Krones AG, 93073 Neutraubling (DE)
(72) Erfinder: Sternkopf, Bernhard, 93073 Neutraubling (DE); Mehlin, Christian, 93073 Neutraubling (DE); Wittmann, Christian, 93073 Neutraubling (DE); Blochmann, Erik, 93073 Neutraubling (DE); Geltinger, Florian, 93073 Neutraubling (DE); Hüttner, Gerald, 93073 Neutraubling (DE); Neumann, Jörg, 93073 Neutraubling (DE); Folger, Kevin, 93073 Neutraubling (DE); Summer, Markus, 93073 Neutraubling (DE); Puettmann, Martin, 93073 Neutraubling (DE); Kindl, Norbert, 93073 Neutraubling (DE); Reiner, Roland, 93073 Neutraubling (DE); Rauschendorfer, Thomas, 93073 Neutraubling (DE); Spitzer, Thomas, 93073 Neutraubling (DE); Suppes, Waldemar, 93073 Neutraubling (DE)
(74) Vertreter: Bittner, Bernhard

(57) **Zusammenfassung**

Vorrichtung (1) zum Herstellen von Kunststoffbehältnissen mit einer Ewärmungseinrichtung (2), welche Kunststoffvorformlinge (10) erwärmt und mit einer in einer Transportrichtung der Kunststoffvorformlinge (10) dieser Erwärmungseinrichtung (2) nachgeordneten Umformungseinrichtung (6), welche die Kunststoffvorformlinge zu den Kunststoffbehältnissen umformt, wobei in der Transportrichtung der Kunststoffvorformlinge zwischen der Erwärmungseinrichtung und der Umformungseinrichtung (6) eine Temperiereinrichtung (4) zum Temperieren der von der Erwärmungseinrichtung (2) erwärmten Kunststoffvorformlinge (10) vorgesehen ist, wobei diese Temperiereinrichtung (4) wenigstens eine an einem um eine vorgegebene Drehachse (D) drehbaren Träger (42) angeordnete Temperiereinheit (40) aufweist und diese Temperiereinheit (4) wenigstens zwei Kontaktiereinrichtungen (44, 46) aufweist, zwischen denen wenigstens ein Abschnitt der Kunststoffvorformling aufnehmbar ist, wobei diese Kontaktiereinrichtungen (44, 46) bezüglich einander entlang einer vorgegebenen Richtung (B) bewegbar sind Erfindungsgemäß verläuft die vorgegebene Richtung (B) gegenüber einer radialen Richtung (R) des Trägers (42) in einem von 0° verschiedenen Winkel verläuft.

## Beschreibung

Die vorliegende Erfindung bezieht sich auf eine Vorrichtung und ein Verfahren zum Herstellen von Kunststoffbehältnissen. Derartige Kunststoffbehältnisse und derartige Verfahren sind aus dem Stand der Technik seit langem bekannt. Üblicherweise weisen diese Behältnisse einen kreisförmigen Querschnitt auf. In manchen Situationen ist es jedoch gewünscht, Behältnisse herzustellen, die einen anderen Querschnitt, etwa einen ovalen Querschnitt aufweisen. In diesem Falle ist es möglich, einen Kunststoffvorformling zunächst ungleichmäßig zu erwärmen und ihn in diesem in der Umfangsrichtung ungleichmäßig erwärmten Zustand mit einer Blasformmaschine, etwa einer Streckblasmaschine, zu expandieren. Über dieses Verfahren wird auf den Kunststoffvorformling ein in der Umfangsrichtung ungleiches Heizprofil aufgebracht.

Bei einer anderen durch die Anmelderin bekannt gewordenen Vorgehensweise wird zunächst der Kunststoffvorformling in einem Ofen einheitlich erwärmt und anschließend gezielt an bestimmten Stellen anders temperiert, beispielsweise "gekühlt". Unter "kühlen" wird dabei nicht zwangsläufig ein kühlen mit kalter Temperatur verstanden, sondern vielmehr ein gezieltes und partielles Temperieren der Vorformlinge mit einer Temperatur, die unter der Temperatur liegt, die die Vorformlinge nach der Erwärmung im Ofen haben. Die partielle Temperierung erfolgt also mit einer Temperatur, die in Relation zu der Temperatur der Vorformlinge nach der Erwärmung im Ofen wesentlich kühler bzw. niedriger ist. Dabei ist bei diesem Verfahren nach dem Heizofen ein Zwischenmodul vorgesehen, welches den Kunststoffvorformling mittels Prägeplatten partiell temperiert. Genauer gesagt wird bei dem aus dem Stand der Technik der Anmelderin bekannten Verfahren der Kunststoffvorformling entlang seiner Längsrichtung bzw. vertikal zwischen zwei Prägeplatten eingeführt. Diese vertikale Bewegung kann über eine durchgehende Nutkurve erreicht werden. Anschließend werden die Prägeplatten über eine Antriebseinrichtung pro Station betätigt und gegebenenfalls der Kunststoffvorformling gedreht.

Bei dieser Vorgehensweise treten unterschiedliche Probleme auf. Damit der Kunststoffvorformling von einer weiteren Transporteinrichtung wie etwa einem Teilungsverzugsstern an die Vorrichtung zum Temperieren übergeben werden kann, wird der Kunststoffvorformling von dieser weiteren Transporteinrichtung gehalten und ein Dorn bzw. genauer ein Haltedorn der eigentlichen Temperiervorrichtung fährt in die Mündung des Kunststoffvorformlings ein. Auf diese Weise entstehen beim Aufstecken vertikale Kräfte, die jedoch oftmals zu hoch für die Klammer des Eingabesterns sind.

Um diese vertikal auftretenden Kräfte abzufangen sind feststehende Abstützgarnituren notwendig, die zu einem nachträglichen Verdrehen des Kunststoffvorformlings führen können und so den Ausrichtungsprozess des Kunststoffvorformlings verfälschen können, da eine Drehstellung des Kunststoffvorformlings üblicherweise vor Eingabe in die Station erfasst wird. Die Ausrichtung selbst erfolgt jedoch erst innerhalb der Station über einen Schrittmotor. Wenn die Vorformlinge also auf dem Weg zwischen Kamerainspektion und Ausrichtung versehentlich noch einmal verdreht werden, wird der Ausrichtungsprozess verfälscht und nicht die richtige Drehstellung erreicht. Die Ausrichtung des Kunststoffvorformlings bzw. dessen Drehstellung sind von hoher Bedeutung, um das Temperaturprofil gezielt auf den erforderlichen Stellen aufzubringen. Daneben erfordert der hohe Vertikalhub im Stand der Technik zum Einfahren des Kunststoffvorformlings zwischen die Prägeplatten eine große, aufwendige und teure Hubkurve mit hohen Belastungen auf den Verfahrschlitten. Daneben geht durch diese Verfahrbewegung Prozesszeit verloren.

Ein weiteres Problem tritt im Stand der Technik teilweise bei der Öffnungs- und Schließbewegung der Prägeplatten (im Folgenden als Kontaktierungseinrichtung bezeichnet) auf. Hierzu werden bei dem internen Stand der Technik der Anmelderin Pneumatikzylinder eingesetzt. Bei Pneumatikzylindern kann keine konstante und gleichbleibende Schaltzeit sichergestellt werden, sodass zwischen den unterschiedlichen Behandlungsstationen in der Regel eine gewisse Streuung auftritt. Die unterschiedlichen Prägezeiten bzw. Berührungszeiten, in denen die Prägeplatten die Außenwandungen der Kunststoffvorformlinge berühren, mindern die Qualität der Formflaschen.

Der vorliegenden Erfindung liegt daher die Aufgabe zu Grunde, den Herstellungsprozess für derartige nicht kreisförmige Behältnisse einfacher zu gestalten. Daneben soll auch eine Möglichkeit geschaffen werden, um Abweichungen zwischen einzelnen Behandlungsstationen zu reduzieren.

Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Herstellen von Kunststoffvorformlingen weist eine Erwärmungseinrichtung auf, welche Kunststoffvorformlinge erwärmt sowie eine in einer Transportrichtung der Kunststoffvorformlinge dieser Erwärmungseinrichtung nachgeordnete Umformungseinrichtung, welche die Kunststoffvorformlinge zu den Kunststoffbehältnissen umformt bzw. expandiert, wobei in der Transportrichtung der Kunststoffvorformlinge zwischen der Erwärmungseinrichtung und der Umformungseinrichtung eine Temperiereinrichtung zum (insbesondere partiellen und insbesondere in der Umfangsrichtung des Kunststoffvorformlings partiellen) Temperieren der von der Erwärmungseinrichtung erwärmten Kunststoffvorformlinge vorgesehen ist, und wobei diese Temperiereinrichtung wenigstens eine an einem um eine vorgegebene Drehachse drehbaren Träger angeordnete Temperiereinheit aufweist und diese Temperiereinheit wenigstens zwei Kontaktierungseinrichtungen aufweist, zwischen denen wenigstens ein Abschnitt der Kunststoffvorformlinge aufnehmbar ist, wobei diese Kontaktierungseinrichtungen bezüglich einander entlang einer vorgegebenen (Bewegungs-)Richtung bewegbar sind.

Erfindungsgemäß verläuft diese vorgegebene Richtung der Bewegung der Kontaktierungseinrichtungen zueinander in einer gegenüber der radialen Richtung des Trägers in einen von 0° verschiedenen Winkel. Neben einer tangentialen Bewegung ist auch eine Schwenkbewegung zum Öffnen und Schließen der Kontaktierungselemente denkbar.

Im Stand der Technik sind die Kontaktierungseinrichtungen derart ausgerichtet, dass eine Öffnungs- und Schließbewegung in einer radialen Richtung bzw. einer Richtung erfolgt, die zur Achse des Trägerrads senkrecht ist. Dies wurde bislang derart gestaltet, um Platz zwischen den einzelnen Behandlungsstationen zu sparen. Jedoch ist bei einer derartigen Öffnungs- und Schließbewegung ausschließlich ein Einführen der Vorformlinge von oben oder unten in die Station möglich, was wegen den genannten Nachteilen vermieden werden soll.

Bevorzugt berühren die Kontaktierungseinrichtungen den Kunststoffvorformling und temperieren diesen in seiner Umfangsrichtung abschnittsweise bzw. partiell. Auf diese Weise kann in einer Umfangsrichtung der Kunststoffvorformlinge ein bestimmtes Temperaturprofil erzeugt werden, wodurch sich das Material des Vorformlings im späteren Umformungsvorgang an diesen Stellen anders verhält als an den nicht-temperierten Stellen. Vorteilhaft weist die Temperiereinrichtung mehrere Temperiereinheiten auf, die jeweils an den besagten Träger angeordnet sind. Unter einem Temperieren der Kunststoffvorformlinge wird dabei insbesondere ein Beaufschlagen mit einer Temperatur verstanden, welche sich von der Temperatur der Kunststoffvorformlinge nach dem Erwärmen im Ofen unterscheidet. Insbesondere handelt es sich bei dem Temperieren um ein Kühlen der besagten Abschnitte des Kunststoffvorformling. Insbesondere werden bestimmte Wandungsabschnitte der Umfangswandung des Kunststoffvorformlings temperiert. Bevorzugt weist die Temperiereinrichtung eine Vielzahl von an dem Träger angeordneten Temperiereinheiten auf.

Bei einer weiteren vorteilhaften Ausführungsform handelt es sich bei der Erwärmungseinrichtung um einen Infrarotofen, der die Kunststoffvorformlinge mit Infrarotstrahlen erwärmt. Es wäre jedoch auch die Verwendung einer Mikrowellenerwärmungseinheit möglich. Bevorzugt weist diese Erwärmungseinrichtung eine Transporteinrichtung zum Transportieren der Kunststoffvorformlinge auf. Bevorzugt weist die Erwärmungseinrichtung Heizelemente auf, welche die Kunststoffvorformlinge erwärmen. Besonders bevorzugt sind diese Heizelemente stationär gegenüber der Transportbewegung der Kunststoffvorformlinge angeordnet.
Unter der oben besagten Relativbewegung der einen Kontaktierungseinrichtung gegenüber der anderen Kontaktierungseinrichtung wird verstanden, dass zumindest eine Kontaktierungseinrichtung bewegt wird, beispielsweise zum Kontaktieren der Kunststoffvorformlinge, auf die andere Kontaktierungseinrichtung zugestellt wird. Bevorzugt werden jedoch beide Kontaktierungseinrichtungen bezüglich einander bewegt. Insbesondere handelt es sich hierbei um eine gleichförmige Bewegung beider Kontaktierungseinrichtungen. Bevorzugt werden die Kontaktierungseinrichtungen entlang eines geradlinigen Pfades bewegt. Es handelt sich dabei insbesondere um eine Öffnungs- und Schließbewegung. Die Kontaktierungseinrichtungen könnten jedoch auch geschwenkt werden, bzw. die Bewegung könnte entlang eines kreissegmentförmigen Pfades verlaufen.

Bevorzugt weicht die vorgegebene Richtung um wenigstens 10°, bevorzugt um wenigstens 20° und besonders bevorzugt um wenigstens 30° von der besagten radialen Richtung ab. Bevorzugt verläuft die vorgegebene Richtung gegenüber der radialen Richtung in einem Winkel von wenigstens 50°, bevorzugt von wenigstens 60° und bevorzugt von wenigstens 70°. Vorteilhaft verläuft die besagte Bewegungsrichtung tangential zu dem besagten Träger, an dem die Erwärmungseinheiten angeordnet sind.

Vorteilhaft handelt es sich hierbei auch um eine Bewegung, die tangential zu einer Transportbewegung der Kunststoffvorformlinge ist. Vorteilhaft werden nämlich die Kunststoffvorformlinge während der Aufbringung des Erwärmungsprofils auf der Umfangswandung entlang eines kreisförmigen Transportpfades bewegt.

Bei einer weiteren vorteilhaften Ausführungsform kontaktieren die Kontaktierungseinrichtungen eine Außenwandung der Kunststoffvorformlinge. Dabei kühlen bevorzugt diese Kontaktierungseinrichtungen die Außenwandung der Kunststoffvorformlinge. Unter einem Kühlen wird hierbei ein Kühlen gegenüber derjenigen Temperatur verstanden, welche die Kunststoffvorformlinge bei dem Auslauf aus dem Ofen aufweisen. Diese kann beispielsweise bei 120° liegen und entsprechend die Temperatur der Kontaktierungseinrichtungen bei beispielsweise 50°.

Die oben genannten Aufgaben werden daher entsprechend auch durch eine Temperiereinrichtung zum Temperieren von Kunststoffvorformlingen erreicht, wobei diese Temperiereinrichtung wenigstens eine an einem um eine vorgegebene Drehachse drehbaren Träger angeordnete Temperiereinheit aufweist und diese Temperiereinheit wenigstens zwei Kontaktierungseinrichtungen aufweist, welche zum Kontaktieren einer Außenwandung der Kunststoffvorformlinge geeignet und bestimmt sind und zwischen denen wenigstens ein Abschnitt der Kunststoffvorformlinge aufnehmbar ist. Dabei sind diese Kontaktierungseinrichtungen, wie oben erwähnt, bezüglich einander entlang einer vorgegebenen Richtung bewegbar.

Erfindungsgemäß verläuft die vorgegebene Richtung gegenüber einer radialen Richtung des Trägers in einem von 0° verschiedenen Winkel.

Bei einer weiteren vorteilhaften Ausführungsform weist die oben genannte Vorrichtung eine Zuführeinrichtung auf, welche der Temperiereinheit bzw. der Temperiereinrichtung die Kunststoffvorformlinge zuführt, wobei die Zuführeinrichtung die Kunststoffvorformlinge der Temperiereinheit bzw. der Temperiereinrichtung in einer Zuführrichtung zuführt, welche zu einer Längsrichtung der Kunststoffvorformlinge im Wesentlichen senkrecht steht.

Die vorliegende Erfindung ist weiterhin auf ein Verfahren zum Herstellen von Kunststoffbehältnissen gerichtet, wobei Kunststoffvorformlinge mittels einer Erwärmungseinrichtung erwärmt werden und die so erwärmten Kunststoffvorformlinge mittels einer der Erwärmungseinrichtung in einer Transportrichtung der Kunststoffvorformlinge nachgeordneten Umformungseinrichtung zu den Kunststoffbehältnissen umgeformt werden, wobei die Kunststoffvorformlinge mittels einer Temperiereinrichtung nach der Erwärmung durch die Erwärmungseinrichtung und vor der Umformung durch die Umformungseinrichtung abschnittsweise temperiert werden. Erfindungsgemäß werden die Kunststoffvorformlinge der Temperiereinrichtung in einer Zuführrichtung zugeführt, die in einer Ebene verläuft, die zu einer Längsrichtung der Kunststoffvorformlinge im Wesentlichen senkrecht steht. Bevorzugt werden die Kunststoffvorformlinge während der Zuführung an die Temperiereinrichtung und auch während des Transports mit dieser auf gleichbleibender vertikaler Höhe transportiert.

Bei dieser Vorgehensweise wird damit der Kunststoffvorformling bzw. das Kunststoffbehältnis während der Übergabe von dieser Zuführeinrichtung an die Erwärmungseinheit und bevorzugt während des gesamten Durchlaufes im Wesentlichen ohne Veränderung seiner vertikalen Position bewegt. Zumindest wird der Kunststoffvorformling nicht bei der Übergabe von der besagten Zuführeinrichtung zu der Temperiereinheit in seiner vertikalen Richtung bewegt. Bevorzugt wird jedoch der Kunststoffvorformling während seiner gesamten Behandlung (insbesondere der Erwärmung und der nachfolgenden Temperierung) und/oder seines gesamten Durchlaufs, d.h. durch die Erwärmungseinrichtung, durch die Zuführeinrichtung (bei der es sich beispielsweise um einen Zwischenstern handeln kann) und die nachfolgenden Umformungseinrichtungen ohne Veränderung seiner vertikalen Position bewegt.

Bevorzugt transportiert die Temperiereinrichtung die Kunststoffvorformlinge entlang eines kreisförmigen Transportpfads und zum Temperieren der Kunststoffvorformlinge werden wenigstens zwei Kontaktiereinrichtungen zugestellt, wobei die Zustellung in einer Richtung erfolgt, die in einem von 0° verschiedenen Richtung bezüglich einer radialen Richtung dieses Transportpfads verläuft. Insbesondere verläuft diese Zustellung in einer Richtung, die mit der radialen Richtung des Transportpfades einen Winkel von wenigstens 20°, bevorzugt von wenigstens 30°, bevorzugt von wenigstens 50° und besonders bevorzugt von wenigstens 70° einschließt.

Weiterhin erfolgt, wie oben erwähnt, bevorzugt die Richtung der Öffnungsbewegung der Kontaktierungseinrichtungen (bzw. Prägeplatten) im Wesentlichen tangential zu dem Behandlungsrad, d.h. zu der Temperiereinrichtung. Der Kunststoffvorformling wird bevorzugt im Wesentlichen senkrecht zu einer Bewegungsrichtung bzw. Verfahrrichtung der Kontaktierungseinrichtungen zwischen diese eingegeben. Mit anderen Worten führt die besagte Zuführeinrichtung die Kunststoffvorformlinge im Wesentlichen senkrecht zu der vorgegebenen Richtung, in der sich die Kontaktierungseinrichtungen bewegen, der Temperiereinheit zu. Auf diese Weise kann eine besonders genaue Übergabe erreicht werden und es kann, wie gesagt, auf die Vertikalbewegung der Kunststoffvorformlinge verzichtet werden. Vorzugsweise wird durch die Bewegungsrichtung der Kontaktierungseinrichtungen einerseits und durch die Zuführrichtung, in der die Kunststoffvorformlinge der Temperiereinheit zugeführt werden, eine horizontale Ebene aufgespannt.

Im Einzelnen werden bevorzugt die folgenden Verfahrensschritte durchgeführt:
- Entnahme des Kunststoffvorformlings aus der Erwärmungseinrichtung
- Übergabe des durch die Erwärmungseinrichtung erwärmten Kunststoffvorformlings in eine erste Halteeinrichtung einer Temperiereinheit der Temperiereinrichtung, wobei diese erste Halteeinrichtung als Greifeinrichtung ausgestaltet ist
- Schließen der Greifeinrichtung der Temperiereinheit
- vertikales Einfahren einer zweiten Halteeinrichtung in eine Mündung des Kunststoffvorformlings
- Zustellen von Kontaktierungseinrichtung auf den Kunststoffvorformling, um diesen zu temperieren
- Wegbewegen der Kontaktierungseinrichtung von dem Kunststoffvorformling
- Entnahme des temperierten Kunststoffvorformlings durch eine weitere Transporteinrichtung
- Entfernen der zweiten Halteeinrichtung aus der Mündung des temperierten Kunststoffvorformlings.

Im Rahmen des Zustellens der Kontaktierungseinrichtungen können beispielsweise die Kontaktierungseinrichtungen bzw. Prägeplatten um den Kunststoffvorformling geschlossen werden. Zum Zweck des Wegbewegens der Kontaktierungseinrichtungen können die Prägeplatten entsprechend geöffnet werden. Die zweite Halteeinrichtung, die insbesondere als Innengreifer für die Kunststoffvorformlinge ausgebildet ist kann auch zu einem früheren Zeitpunkt aus dessen Mündung herausgezogen werden. Weiterhin kann noch optional ein Drehen des Kunststoffvorformlings bezüglich seiner Längsachse erfolgen. Im Rahmen dieser Drehung kann der Kunststoffvorformling entsprechend seiner Gewindestellung bzw. entsprechend einer Ausrichtmarkierung des Gewindes gedreht werden.

Bei einer weiteren erfindungsgemäßen Ausgestaltung weist die Temperiereinrichtung zum Temperieren von Kunststoffvorformlingen wiederrum eine an einem um eine vorgegebene Drehachse drehbaren Träger angeordnete Temperiereinheit auf und diese Temperiereinheit weist wenigstens zwei Kontaktierungseinrichtungen auf, welche zum Kontaktieren einer Außenwandung der Kunststoffvorformlinge geeignet und bestimmt sind und zwischen denen wenigstens ein Abschnitt der Kunststoffvorformlinge aufnehmbar ist. Weiterhin weist die Vorrichtung hier eine Antriebseinrichtung zum Bewegen der Kontaktierungseinrichtungen auf.

Erfindungsgemäß weist die Antriebseinrichtung eine Aktoreinrichtung auf, welche wenigstens eine Kontaktierungseinrichtung antreibt und/oder bewegt. Während im Stand der Technik Führungskurven zum Einsatz kommen, welche die Kontaktierungseinrichtungen antreiben und oder bewegen, wird nunmehr vorgeschlagen, dass der Kontaktierungseinrichtung eine Aktoreinrichtung zugeordnet ist, welche diese Bewegungen erzeugt bzw. welche die Kontaktierungseinrichtungen antreibt.

Vorteilhaft weist die Temperiereinrichtung eine Vielzahl von Temperiereinheiten auf und jede dieser Temperiereinheiten weist eine Aktoreinrichtung auf. Auf diese Weise ist eine individuelle Steuerung der einzelnen Aktoreinrichtungen und damit eine individuelle Bewegung der einzelnen Kontaktiereinrichtungen möglich.
Bevorzugt ist eine Bewegung der ersten Kontaktierungseinrichtung mit einer Bewegung der zweiten Kontaktierungseinrichtung mittels wenigstens einer Kopplungseinrichtung gekoppelt. Es wird daher bei dieser Ausgestaltung vorgeschlagen, dass die Bewegungen der Kontaktierungseinrichtungen nicht separat bzw. getrennt angesteuert werden, sondern diese miteinander gekoppelt sind. Auf diese Weise kann eine besonders gleichförmige Bewegung erreicht werden.

Bei einer weiteren vorteilhaften Ausführungsform weist die Zuführeinrichtung einen drehbaren Träger auf und eine Vielzahl von an diesem Träger angeordnete Halteeinrichtungen zum Halten der Kunststoffvorformlinge. Dabei kann die Zuführeinrichtung beispielsweise eine Vielzahl von Greifklammern aufweisen, welche die Kunststoffvorformlinge halten und zum Übergeben der Kunststoffvorformlinge an die Temperiereinheiten dienen. Diese Halteeinrichtungen können beispielsweise Greifklammern sein, welche die Kunststoffvorformlinge in einem vorgegebenen Bereich, beispielsweise unterhalb eines sogenannten Tragrings, tragen. Bevorzugt sind diese Halteeinrichtungen gegenüber dem Träger der Zuführeinrichtungen in ihrer Gesamtheit beweglich, etwa an einem schwenkbaren Arm angeordnet, und gegebenenfalls auch in einer radialen Richtung dieses Trägers beweglich. Vorteilhaft handelt es sich bei dieser Zuführeinrichtung um einen sogenannten Teilungsverzugsstern, der dazu dient bzw. vorgesehen ist, eine Teilung der einzelnen Kunststoffvorformlinge auf den Transportweg von der Erwärmungseinrichtung zu der Temperiereinrichtung zu verändern. Üblicherweise werden die Kunststoffvorformlinge in der Erwärmungseinrichtung mit einem sehr viel geringerem Abstand zueinander transportiert als in der Temperiereinrichtung. Der Teilungsverzugsstern dient zum Ändern dieses Abstands.

Bei einer weiteren vorteilhaften Ausführungsform weist die Temperiereinrichtung wenigstens eine erste Halteeinrichtung zum Halten der Kunststoffvorformlinge und insbesondere eine Vielzahl von Halteeinrichtungen zum Halten der Kunststoffvorformlinge auf. Insbesondere ist dabei jeder Temperiereinheit eine derartige Halteeinrichtung zum Halten der Kunststoffvorformlinge zugeordnet. Insbesondere handelt es sich hierbei um eine Greifklammer, welche den Kunststoffvorformling an seiner Außenoberfläche und insbesondere an oder unterhalb seines Gewindes greift und auf diese Weise hält. Die aus dem Stand der Technik bekannten Vorrichtungen weisen eine derartige Greifeinrichtung nicht auf. Hierbei wird im Stand der Technik bislang üblicherweise der Kunststoffvorformling von der Greifeinrichtung der Zuführeinrichtung, wie etwa des Teilungsverzugssterns, an einem Haltedorn der Temperiereinrichtung übergeben.

Im Rahmen der vorliegenden Vorrichtung wird vorgeschlagen, dass der Kunststoffvorformling über einen Zwischenstern, wie etwa einen Teilungsverzugsstern, aus der Erwärmungseinrichtung entnommen wird und über diesen an die besagte Greifeinrichtung der Temperiereinheit, beispielsweise an eine auf der Prägestation befindliche Klammer, übergeben wird. Auf diese Weise kann der Kunststoffvorformling bereits in einer Zielposition angeordnet werden und erst anschließend ist es möglich, dass beispielsweise ein Dorn der Temperiereinheit in eine Mündung des Kunststoffvorformlings eingreift. Bevorzugt ist jeder Temperiereinheit sowohl eine erste Halteeinrichtung, insbesondere in Form der besagten Greifklammer, und auch eine zweite Halteeinrichtung, insbesondere in Form eines Haltedorns zugeordnet. Vorteilhaft halten diese beiden Halteeinrichtungen den Kunststoffvorformling wenigstes zeitweise gemeinsam.

Bevorzugt ist, wie gesagt, eine Bewegung der ersten Kontaktierungseinrichtung mit einer Bewegung der zweiten Kontaktierungseinrichtung gekoppelt. Dabei weist insbesondere die Vorrichtung eine mechanische Kopplungseinrichtung auf. Es wäre auch die Verwendung einer elektronischen Kopplung denkbar, etwa eine steuerungsseitige Kopplung, welche die Antriebe zweier Kontaktierungseinrichtungen steuert. Bevorzugt ist jedoch die besagte mechanische Kopplungseinrichtung vorgesehen. Dabei kann beispielsweise, wie unten genauer beschrieben, diese Kopplung über ein Gestänge erfolgen. Bei dieser Ausführungsform ist es möglich, dass nur ein Aktor bzw. eine Antriebseinrichtung vorgesehen ist, und die besagte Kopplungseinrichtung die Bewegung dieses Aktors auf beide Kontaktierungseinrichtungen überträgt. Durch diese Kopplung ist es möglich, dass sich beide Kontaktierungseinrichtungen im Wesentlichen gleichzeitig bewegen und insbesondere auch geradlinig, insbesondere ist eine Bewegung denkbar, welche bewirkt, dass eine geometrische Mitte zwischen den beiden Kontaktierungseinrichtungen während der Zustellbewegung der Kontaktierungseinrichtungen aufeinander zu gleich bleibt. Vorteilhaft liegt auch eine Längsachse des Kunststoffvorformlings in dieser geometrischen Ebene bzw. in dieser geometrischen Mitte. Auf diese Weise können die beiden Kontaktierungseinrichtungen gleichförmig auf die Kunststoffvorformlinge zugestellt (und auch wieder von diesen entfernt) werden.

Bei einer weiteren vorteilhaften Ausführungsform weist die Temperiereinheit eine Dreheinrichtung zum Drehen des Kunststoffvorformlings bezüglich seiner Längsrichtung auf. Diese Dreheinrichtung kann dabei ein weiteres Halteelement aufweisen, welches den Kunststoffvorformling hält. Bei diesem weiteren Halteelement bzw. weiteren Halteeinrichtung kann es sich insbesondere um einen Dorn handeln, der in eine Mündung des Kunststoffvorformlings eingreift. Im Verfahrensablauf kann der Kunststoffvorformling zunächst von der Greifklammer gehalten werden, anschließend kann der besagte Dorn in den Kunststoffvorformling eingreifen und so (insbesondere nach einem Öffnen der Greifklammer) auch eine Drehung um dessen Längsrichtung bewirken.

Bei einer weiteren vorteilhaften Ausführungsform liegen die Durchmesser dieses Innengreifens für den Kunststoffvorformling der Klammer zum Halten der Kunststoffvorformlinge und auch die Durchmesser der Kontaktierungseinrichtungen koaxial übereinander. Auf diese Weise kann erreicht werden, dass bei den einzelnen Übergaben und auch bei dem Temperieren des Kunststoffvorformlings keine in der zu der Längsrichtung des Kunststoffvorformlings senkrechten Richtung wirkende Kräfte auftreten.

Bevorzugt weist die Vorrichtung eine zweite Halteeinrichtung zum Halten der Kunststoffvorformlinge auf, welche in eine Mündung der Kunststoffvorformlinge einführbar ist.

Bei einer weiteren vorteilhaften Ausführungsform weist die Vorrichtung eine Drehstellungserfassungseinrichtung auf, welche eine Drehstellung der Kunststoffvorformlinge bezüglich deren Längsrichtungen (insbesondere berührungslos) erfasst. Dabei kann es sich beispielsweise um eine optische Erfassungseinrichtung handeln, welche eine bestimmte Markierung des Kunststoffvorformlings erfasst und anhand der Position dieser Markierung die Drehstellung des Kunststoffvorformlings erfasst. Diese Markierung ist dabei bevorzugt an einer bestimmten Stelle am Außenumfang angeordnet, der für eine Drehstellung eines Gewindes des Kunststoffvorformlings charakteristisch ist. In Reaktion auf die so erfasste Drehstellung kann die Drehstellung des Kunststoffvorformlings angepasst werden.

Während also im Stand der Technik die Kunststoffvorformlinge direkt von der Zuführeinrichtung an den Haltedorn übergeben werden, wird im Rahmen der Erfindung auch vorteilhaft vorgeschlagen, dass die Kunststoffvorformlinge zunächst an eine Halteeinrichtung bzw. eine Greifklammer übergeben werden, die den einzelnen Temperiereinheiten jeweils zugeordnet ist.

Bei einer weiteren vorteilhaften Ausführungsform weist die Vorrichtung eine Aktoreinrichtung auf, welche sowohl die Bewegung der ersten Kontaktierungseinrichtung als auch die Bewegung der zweiten Kontaktierungseinrichtung bewirkt. Bei dieser Aktoreinrichtung bzw. Antriebseinrichtung kann es sich beispielsweise um einen Elektromotor handeln, denkbar wären jedoch auch pneumatische, hydraulische oder magnetische Antriebe. Auch wäre als Antriebseinrichtung eine Führungskurve denkbar. Mit anderen Worten ist die Aktoreinrichtung aus einer Gruppe von Aktoreinrichtungen ausgewählt, welche elektrisch betätigte Aktoreinrichtungen, hydraulisch betätigte Aktoreinrichtungen, pneumatisch betätigte Aktoreinrichtungen und/oder magnetisch betätigte Aktoreinrichtungen enthält.

Bei einer weiteren vorteilhaften Ausführungsform sind die Bewegungen der beiden Kontaktierungseinrichtungen über ein mechanisches Gestänge gekoppelt. Dieses Gestänge kann dabei, wie unten genauer erläutert, an einem drehbaren Körper angelenkt sein. So wäre es beispielsweise möglich, dass die Aktoreinrichtung eine translatorische Verfahrbewegung durchführt, welche über das Gestänge in eine Drehbewegung und/oder eine weitere translatorische Bewegung der anderen Kontaktierungseinrichtung umgesetzt wird. Daneben wäre es auch möglich, dass die translatorische Verfahrbewegung der Kontaktierungseinrichtungen aus einer Drehbewegung abgeleitet wird. Daneben wäre es auch denkbar, dass eine translatorische Verfahrbewegung der beiden Kontaktierungseinrichtungen direkt aus einer Rotation einer Aktoreinrichtung, beispielsweise eines Elektromotors, abgeleitet wird.

Wie bereits oben erwähnt, ist bevorzugt diese Kinematik derart ausgelegt, dass sich die Kontaktierungseinrichtungen bzw. die Aufnehmungen für die Kontaktierungseinrichtungen tangential zu einer Hauptdrehrichtung des Aufnahmerades bzw. des Trägers bewegen und besonders bevorzugt die Bewegung der beiden Kontaktierungseinrichtungen entgegensetzt zu einer Mitte hin erfolgt. Auf diese Weise ist eine gleichförmige Zustellung der Kontaktierungseinrichtungen auf den Kunststoffvorformling hin denkbar.

Bei einer weiteren vorteilhaften Ausführungsform weist die Vorrichtung einen Anschlag auf, bzw. eine Anschlagseinrichtung, welche eine Endstellung der Kontaktierungselemente definiert. So könnte sich beispielsweise an den Aufnahmeeinrichtungen für die Kontaktierungseinrichtung ein Anschlag befinden, der eine Mittelposition der Kontaktierungseinrichtungen definiert und besonders bevorzugt auch die auf den Kunststoffvorformling wirkende Kraft begrenzt.

Bei einer weiteren vorteilhaften Ausführungsform wäre es denkbar, dass die Kontaktierungseinrichtungen selbst in einer Längsrichtung des Kunststoffvorformlings von einem ihnen zugeordneten Träger entfernt werden können.

Bei einer weiteren vorteilhaften Ausführungsform ist die Aktoreinrichtung auf einen Schlitten angeordnet. So könnte beispielsweise auch als Aktoreinrichtung ein Linearmotor Anwendung finden.

Bei einer weiteren vorteilhaften Ausführungsform weist die Kopplungseinrichtung wenigstens einen stangenförmigen Körper auf, über den eine Kontaktierungseinrichtung angelenkt ist. So kann beispielsweise die Kontaktierungseinrichtung an einem drehbaren Element über den stangenartigen Körper angelenkt sein.

Bei einer weiteren vorteilhaften Ausführungsform weist die Kopplungseinrichtung einen drehbaren Träger auf, an dem die Kontaktierungseinrichtungen über das Gestänge angelenkt sind. Wie unten genauer erläutert, kann durch eine derartige Anlenkung eine gleichförmige Zustellbewegung erreicht werden.

Bei einer weiteren vorteilhaften Ausführungsform weist die Vorrichtung bzw. die Temperiereinrichtung eine erste Halteeinrichtung zum Halten der Kunststoffvorformlinge auf. Vorteilhaft weist, wie oben erwähnt, die Temperiereinrichtung auch eine zweite Halteeinrichtung zum Halten der Kunststoffvorformlinge auf. Vorteilhaft kann dabei eine dieser Halteeinrichtungen als Greifklammer ausgebildet sein und die andere als Haltedorn.

Bevorzugt kann dabei für die Greifklammer eine elektrische Antriebseinrichtung vorgesehen sein, welche eine Öffnungs- und Schließbewegung dieser Greifeinrichtung bewirkt. Vorteilhaft ist die erste Halteeinrichtung daher schaltbar, d.h. es handelt sich insbesondere um eine aktive Halteeinrichtung bzw. eine aktive Greifklammer die geschaltet, und so geschlossen und geöffnet werden kann.

Bei einer weiteren vorteilhaften Ausführungsform koppelt die Kopplungseinrichtung die Bewegung der ersten Kontaktierungseinrichtung derart an die Bewegung der zweiten Kontaktierungseinrichtung, dass sich die erste Kontaktierungseinrichtung und die zweite Kontaktierungseinrichtung (insbesondere gleichförmig) in entgegengesetzten Richtungen bewegen. Diese Bewegung kann dabei ein Zustellen auf den Kunststoffvorformling sein, aber auch ein Entfernen von dem Kunststoffvorformling. Bevorzugt handelt es sich hier um geradlinige Bewegungen.

Wie oben erwähnt, weist bevorzugt die Temperiereinheit eine Dreheinrichtung zum Drehen der Kunststoffvorformlinge bezüglich deren Längsrichtungen auf. Bei dieser Dreheinrichtung kann es sich insbesondere aber nicht ausschließlich um einen Schrittmotor handeln.

Bei einer weiteren vorteilhaften Ausführungsform ist die Kopplungseinrichtung innerhalb eines Transportpfades angeordnet, entlang dessen die Kunststoffvorformlinge mittels der Temperiereinheit transportiert werden. Vorteilhaft handelt es sich bei diesem Transportpfad, wie oben erwähnt, um einen kreisförmigen Transportpfad. Bevorzugt sind auch die Aktoreinrichtungen innerhalb dieses Transportpfades angeordnet. So können beispielsweise die Aktoreinrichtungen verglichen zu einem Teilkreis des Behandlungsrads d.h. dem Kreis, auf dem die Kunststoffvorformlinge während ihrer Temperierung transportiert werden, auf einem Kreis mit einem kleineren Durchmesser platziert sein.

Bei einer weiteren vorteilhaften Ausführungsform ist wenigstens eine Kontaktierungseinrichtung und sind bevorzugt beide Kontaktierungseinrichtungen von einem fließfähigen und insbesondere flüssigen Temperiermedium durchströmbar. So können im Inneren dieser Kontaktierungseinrichtungen Kanäle vorgesehen sein, durch welche ein Temperiermedium strömen kann. Durch dieses Temperiermedium können die Kontaktierungseinrichtungen auf einem bestimmten Temperaturniveau, beispielsweise auf 50°C, gehalten werden.

Bei einer weiteren bevorzugten Ausführungsform kann die besagte Halteeinrichtung für die Kunststoffvorformlinge oberhalb der Kontaktierungseinrichtungen angeordnet sein. Dabei kann diese Halteeinrichtung aktiv schaltbar sein.

Bei einer weiteren vorteilhaften Ausführungsform sind die Kontaktierungseinrichtungen jeweils an Trägern angeordnet und besonders bevorzugt werden sie an diesen Trägern durch eine Kraft- und/oder formflüssige Verbindung gehalten.

Bei einer weiteren vorteilhaften Ausführungsform sind die Bewegungen der ersten Kontaktierungseinrichtungen und der zweiten Kontaktierungseinrichtung derart gekoppelt, dass sich die Kontaktierungseinrichtungen in einer Richtung bewegen, die in einer radialen Richtung des Hauptträgers einen von 0° verschiedenen Winkel einschließt. Insbesondere handelt es hierbei um eine Richtung, die im Wesentlichen tangential zu der Hauptdrehrichtung der Kunststoffvorformlinge angeordnet ist, wie oben erwähnt.

Bei einer weiteren vorteilhaften Ausführungsform ist ein Öffnungshub zwischen den Kontaktierungseinrichtungen kleiner als 70 mm, bevorzugt kleiner als 60 mm und besonders bevorzugt kleiner als 55 mm. Dieser Öffnungshub ist ausreichend, um einen Kunststoffvorformling senkrecht zu seiner Längsrichtung zwischen die Kontaktierungseinrichtungen einzuführen. Wie oben erwähnt, wird bevorzugt der Kunststoffvorformling senkrecht zu seiner Längsrichtung zwischen die Kontaktierungseinrichtungen eingeführt.

Die vorliegende Erfindung ist weiterhin auf ein Temperiereinrichtung zum Temperieren von Kunststoffvorformlingen gerichtet, wobei diese Temperiereinrichtung wenigstens eine an einem um eine vorgegebene Drehachse drehbaren Träger angeordnete Temperiereinheit aufweist und diese Temperiereinheit wenigstens zwei Kontaktierungseinrichtungen aufweist, welche zum Kontaktieren einer Außenwandung der Kunststoffvorformlinge geeignet und bestimmt sind und zwischen denen wenigstens ein Abschnitt der Kunststoffvorformlinge aufnehmbar ist. Weiterhin weist diese Kontaktierungseinrichtung eine Antriebseinrichtung zum Bewegen der Kontaktierungseinrichtungen in einer vorgegebenen Bewegungsrichtung auf.

Erfindungsgemäß weist die Vorrichtung eine Erfassungseinrichtung auf, um wenigstens zeitweise eine Position wenigstens einer Kontaktierungseinrichtung in der vorgegebenen Bewegungsrichtung zu erfassen.

Wie oben erwähnt, kann eine Öffnungs- und Schließbewegung der Kontaktierungseinrichtung über eine Ansteuerung mittels Pneumatikzylindern erfolgen. Bei Pneumatikzylindern kann wie erwähnt keine konstante und gleichbleibende Schaltzeit sichergestellt werden, weshalb mit einer Streuung bei den Behandlungszeiten zwischen den einzelnen Behandlungsstationen zu rechnen ist. Um dieser Streuung entgegen zu wirken, wird vorgeschlagen, die Öffnungs- und Schließzeiten zu messen und die Stellung der Prägeplatten zu erfassen. Es wäre zu diesem Zweck möglich, eine Stellung der Kontaktierungseinrichtungen über eine Erfassungseinrichtung zu erfassen. Auf diese Weise kann die Bewegung geregelt werden.

Vorteilhaft ist an dem Träger eine Vielzahl von Temperiereinheiten angeordnet und jede Temperiereinheit weist eine Erfassungseinrichtung auf, um wenigstens zeitweise eine Position wenigstens einer Kontaktierungseinrichtung in der Bewegungsrichtung zu erfassen. Mit anderen Worten wird bevorzugt die Relativstellung der Kontaktierungseinrichtung bezüglich des zu temperierenden Kunststoffvorformlings erfasst.

Bei einer weiteren vorteilhaften Ausführungsform weist die Vorrichtung eine Steuerungseinrichtung auf, um die Antriebseinrichtung in Abhängigkeit von der erfassten Position der wenigstens einen Kontaktierungseinrichtung zu steuern. Insbesondere erfolgt eine Regelung der Kontaktierungseinrichtung (insbesondere deren Bewegung) bzw. eine Regelung dieser Antriebseinrichtung.

Bei einer weiteren vorteilhaften Ausführungsform handelt es sich bei der Antriebseinrichtung um eine pneumatische Antriebseinrichtung. Denkbar wären jedoch auch hydraulische, magnetische oder elektrische Antriebseinrichtungen.

Bei einer weiteren vorteilhaften Ausführungsform weist die Temperiereinrichtung eine Zeitmesseinrichtung auf. Bevorzugt ist diese Zeitmesseinrichtung geeignet und bestimmt, einen zeitigen Abstand zwischen einem ersten Signal, welches für die Ansteuerung der Antriebseinrichtung charakteristisch ist, und einen zweiten Signal, welches für eine Position der Kontaktierungseinrichtung charakteristisch ist, zu erfassen.

Bei dieser Ausführungsform ist es möglich, dass die Stellung der Kontaktierungseinrichtung über eine Erfassungseinrichtung, wie beispielsweise einen Näherungsschalter, abgefragt wird. Bei jeder einzelnen Erwärmungseinheit kann die Zeit von dem elektrischen Schaltsignal bis zur einer Betätigung der Erfassungseinrichtung, insbesondere eines Näherungsschalters, gemessen werden und zwar besonders bevorzugt unabhängig voneinander beim Schließen und beim Öffnen. Eine steigende Flanke der Ventilansteuerung der pneumatischen Antriebseinrichtung kann dabei vorliegen bis die Kontaktierungseinrichtungen geschlossen sind und eine fallende Flanke der Ventilansteuerung bis die Kontaktierungseinrichtungen geöffnet sind. Beim nächsten Durchlauf der Kontaktierungseinrichtung bzw. der Temperiereinheit können die gemessenen Zeiten als Referenzwert bzw. als Vorhalt eingerechnet werden. Dies bedeutet, dass das Ansteuersignal um die gemessene Zeit früher ausgegeben wird als der gewünschte Sollzeitpunkt. Auf diese Weise können die einzelnen Stationenwerte aufeinander angepasst werden, sodass die Kontaktierung der Kunststoffvorformlinge in stets genau der gleichen Weise erfolgt.

Daneben kann auch wiederum eine Messung durchgeführt werden, die dann wiederum für den nächsten Umlauf gilt. Auf diese Weise kann auch ein langsames Wegdriften, das zum Beispiel durch ein Einlaufen zu Stande kommt, kompensiert werden.

Daneben wäre es möglich, dass in einem speziellen Einlaufprozess, der beispielsweise nach einem längeren Stillstand der Anlage vorgenommen wird, die Kontaktierungseinrichtung bereits vor dem Einlaufen der erstens Kunststoffvorformlinge für eine Runde leer betätigt werden und die Verzögerungszeiten gemessen werden. Auf diese Weise kann dem Umstand Rechnung getragen werden, dass die letzte Messung zu lange zurück liegt und sich die Zeiten durch einen Standby-Betrieb eventuell zu sehr verändert haben könnten.

Bevorzugt ist auch hier wieder eine Bewegung der ersten Kontaktierungseinrichtung mit einer Bewegung der zweiten Kontaktierungseinrichtung mittels einer Kopplungseinrichtung gekoppelt. Wie erwähnt kann es sich auch hier wiederrum bei der Kopplungseinrichtung um eine mechanische Kopplungseinrichtung handeln.

Die vorliegende Erfindung ist weiterhin auf ein Verfahren zum Behandeln von Behältnissen und insbesondere zum Behandeln von Kunststoffbehältnissen gerichtet. Dabei ist eine Vielzahl von im Wesentlichen gleichartigen Behandlungsstationen vorgesehen, welche die Behältnisse mit wenigstens einem Behandlungselement im Wesentlichen gleichartig behandeln. Weiterhin wird mittels pneumatischer Antriebe, welche den einzelnen Behandlungsstationen zugeordnet sind, jeweils das wenigstens eine Behandlungselement gegenüber dem zu behandelndem Behältnis bewegt. Erfindungsgemäß wird mittels einer Erfassungseinrichtung wenigstens ein Wert erfasst, der für eine geometrische Position des Behandlungselements gegenüber dem Behältnis charakteristisch ist und/oder es wird wenigstens ein erster Zeitwert bestimmt, der für ein Erreichen einer geometrischen Position des Behandlungselements gegenüber dem Behältnis charakteristisch ist und auf Basis dieses gemessenen Werts erfolgt eine Steuerung des pneumatischen Antriebs.

Es wird daher auch verfahrensseitig vorgeschlagen, dass eine Steuerung und insbesondere eine Regelung des pneumatischen Antriebs erfolgt und zwar insbesondere auf Basis von Werten, die für eben dieses Behandlungselement bestimmt wurden. Bevorzugt erfolgt eine Regelung dieses Antriebs, wobei besonders bevorzugt auf Basis eines ersten gemessenen Wertes eine Veränderung des Antriebs bzw. eines Antriebsparameters erfolgt und bevorzugt in einem weiteren Durchlauf wiederum die besagten Werte bestimmt werden.

Das hier beschriebene Konzept kann insbesondere genutzt werden, um die Parameter mehrerer Behandlungselemente aufeinander anzupassen, sodass mit allen Behandlungsstationen im Wesentlichen gleichartige Behandlungsschritte der Behältnisse durchgeführt werden.

Die Erfindung wird hier insbesondere wieder im Hinblick auf die bereits oben beschriebenen Kontaktierungseinrichtungen beschrieben, es wird jedoch darauf hingewiesen, dass das hier beschriebene Konzept auch bei anderen Maschinen einsetzbar ist, bei denen die Behältnisse mittels Behandlungselementen behandelt werden, beispielsweise bei Erwärmungseinrichtungen, bei Umformungseinrichtungen oder auch bei Fülleinrichtungen. Bei den Behältnissen kann es sich sowohl um Kunststoffvorformlinge handeln als auch im Kunststoffbehältnisse wie etwa Kunststoffflaschen.

Bevorzugt werden daher die Zeitwerte von mehreren Behandlungsstationen gemessen und die pneumatischen Antriebe der einzelnen Behandlungsstationen werden derart gesteuert, dass die Behandlungszeiten der jeweiligen Behältnisse mit dem jeweiligen Behandlungselementen für die einzelnen Behandlungsstationen einander angeglichen werden.

Bei einem weiteren bevorzugten Verfahren werden die gemessenen Werte für die Positionen und/oder die Zeitwerte abgespeichert.

Bei einem weiteren bevorzugten Verfahren wird ein Schaltpunkt wenigstens eines Ventils der pneumatischen Antriebseinrichtung gesteuert. Besonders bevorzugt werden die Schaltpunkte der einzelnen Ventile der pneumatischen Antriebseinrichtungen der einzelnen Behandlungsstationen gesteuert und insbesondere derart aufeinander angepasst, dass eine einheitliche Behandlung der jeweiligen Behältnisse mit den einzelnen Behandlungseinheiten erfolgt.

Bei einem weiteren bevorzugten Verfahren handelt es sich bei dem Behandlungselement um eine Kontaktierungseinrichtung, welche einen Kunststoffvorformling zu dessen Temperierung kontaktiert. Bei dem hier beschriebenen Verfahren können auf diese Weise die Kontaktzeiten der einzelnen Kunststoffvorformlinge mit den Kontaktierungseinrichtungen einander angeglichen werden und so kann eine einheitliche Temperierung der Kunststoffvorformlinge erfolgen.

Weitere Vorteile und Ausführungsformen ergeben sich aus den beigefügten Zeichnungen: Darin zeigen:
- Fig. 1: eine Detaildarstellung einer Behandlungseinrichtung nach dem Stand der Technik;
- Fig. 2: eine Darstellung zur Zuführung der Kunststoffvorformlinge an eine Behandlungseinrichtung nach dem Stand der Technik;
- Fig. 3: eine Seitenansicht der in Fig. 1 gezeigten Behandlungseinrichtung nach dem Stand der Technik;
- Fig. 4: eine weitere Darstellung der Behandlungseinrichtung nach dem Stand der Technik;
- Fig. 5: eine Darstellung einer gesamten Anlage zum Behandeln von Kunststoffbehältnissen;
- Fig. 6: eine weitere Darstellung einer Anlage zum Behandeln von Behältnissen;
- Fig. 7: eine Darstellung einer erfindungsgemäßen Behandlungseinrichtung;
- Fig. 8: eine Detaildarstellung der in Fig. 7 gezeigten Behandlungseinrichtung;
- Fig. 9: eine Frontansicht der in Fig. 7 gezeigten Behandlungseinrichtung;
- Fig. 10: eine weitere Detailansicht einer erfindungsgemäßen Behandlungseinrichtung;
- Fig. 11: eine weitere Detailansicht einer erfindungsgemäßen Behandlungseinrichtung; und
- Fig. 12: eine weitere Detailansicht einer erfindungsgemäßen Behandlungseinrichtung.

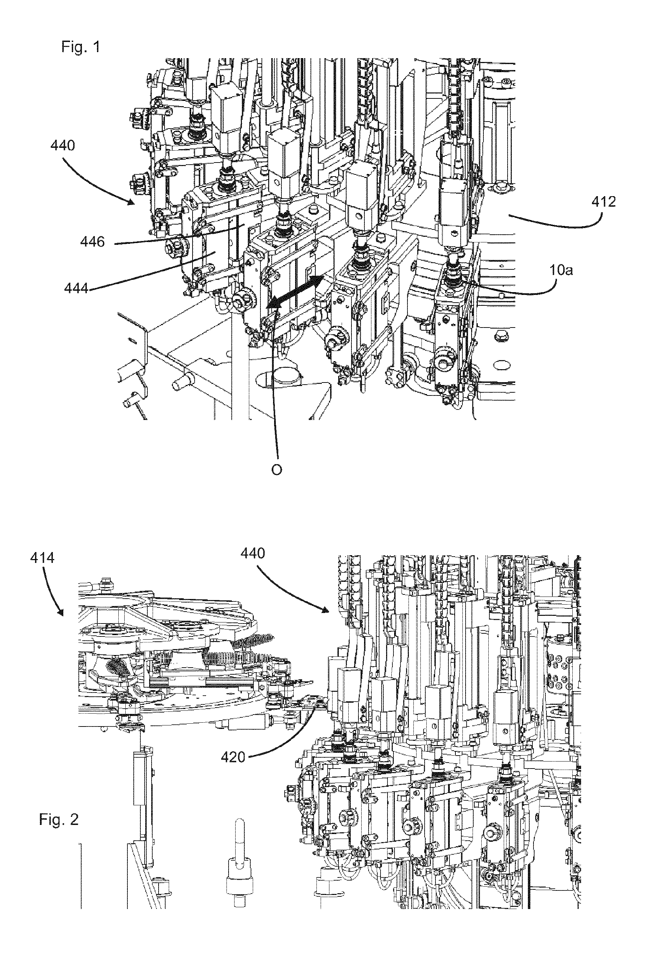

Fig. 1 zeigt eine Vorrichtung zum Temperieren von Behältnissen und insbesondere von Kunststoffvorformlingen nach dem Stand der Technik. Diese Vorrichtung weist dabei einen drehbaren Träger 412 auf, an den eine Vielzahl von Behandlungseinheiten 440 angeordnet ist. Diese Behandlungseinheiten weisen jeweils eine erste Kontaktierungseinrichtung 444 und eine zweite Kontaktierungseinrichtung 446 auf, welche dazu geeignet und bestimmt sind, einen Kunststoffvorformling, von dem hier lediglich ein Gewinde 10a sichtbar ist, an seiner Außenwandung zu kontaktieren. Dabei können diese Kontaktierungseinrichtungen 444, 446 Wandungen aufweisen, welche an bestimmte Bereiche der Kunststoffvorformlinge anlegbar sind, um diese so zu temperieren und insbesondere gegenüber der Temperatur, welche diese Kunststoffvorformlinge beim Auslaufen aus einem Ofen haben, zu kühlen. Dabei wird der Kunststoffvorformling entlang seiner Längsrichtung zwischen die beiden Kontaktierungseinrichtungen 444 und 446 eingeschoben, d.h. es wird hier ein vertikaler Hub des Kunststoffvorformlings vorgenommen. Weiterhin werden die Kontaktierungseinrichtungen 444, 446 in der radialen Richtung des Trägers 412 auseinandergeschoben, was durch den Pfeil O veranschaulicht ist. Nach diesem Öffnen wird der Kunststoffvorformling eingeschoben und die Kontaktierungseinrichtungen werden auf den Kunststoffvorformling zugestellt.

Fig. 2 veranschaulicht den gesamten Vorgang. Man erkennt dabei, dass die Kunststoffvorformlinge direkt von einer Greifklammer 420 einer Zuführeinrichtung 414 den einzelnen Behandlungseinheiten zugeführt werden. Genauer gesagt wird der erwärmte Kunststoffvorformling über die Zuführeinrichtung 414 bzw. den Teilungsverzugsstern 414 direkt an den Innengreifer der einzelnen Behandlungseinheiten übergeben und anschließend in seiner Längsrichtung nach unten verschoben.

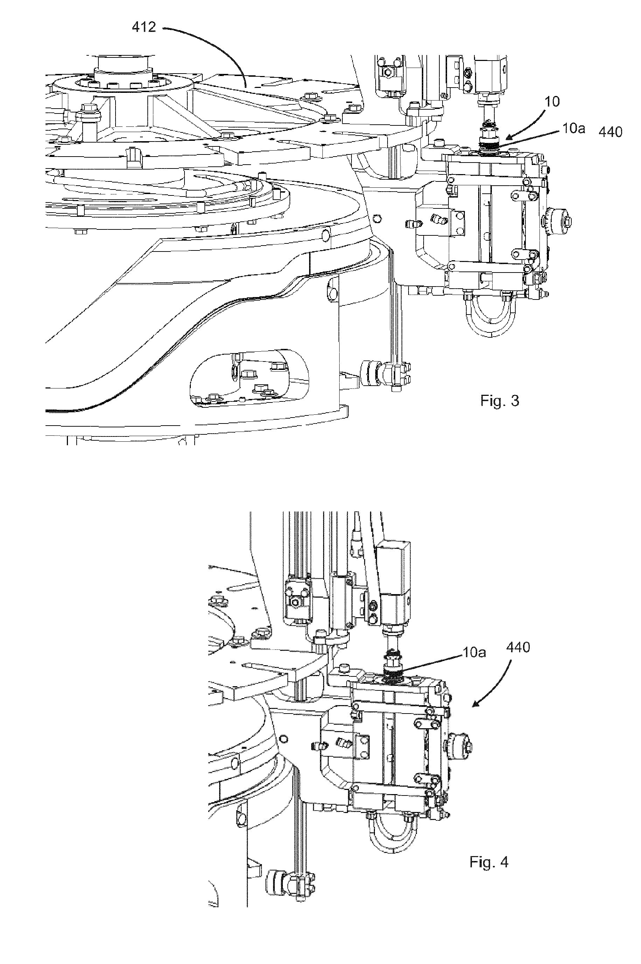

Fig. 3 zeigt eine weitere detaillierte Darstellung einer entsprechenden Vorrichtung nach dem Stand der Technik. Erkennbar ist hier wieder der Kunststoffvorformling 10 bzw. dessen Mündung 10a, die aus der Temperiereinheit 440 herausragt. Man erkennt, dass die Kontaktierungseinrichtungen hier in ihrer radialen Richtung geöffnet und geschlossen werden.

Fig. 4 zeigt eine entsprechend vergrößerte Darstellung. Insbesondere bei dieser Darstellung erkennt man, dass die Behandlungseinheiten kein eigenes Greifelement zum Halten der Kunststoffvorformlinge aufweisen, sondern der Halt der Kunststoffvorformlinge lediglich über den Innengreifer erfolgt, der in die Mündung 10a der Kunststoffvorformlinge eingreift.

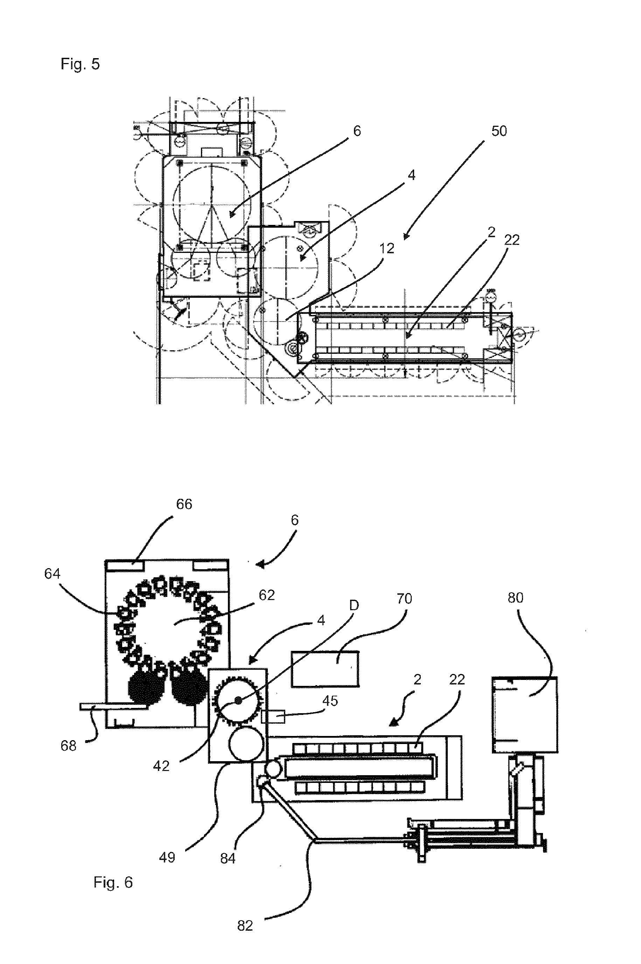

Fig. 5 zeigt eine Veranschaulichung einer Anlage 50 zum Behandeln von Behältnissen. Diese weist hier eine Erwärmungseinrichtung 2 auf, wie einen Ofen, durch den die Kunststoffvorformlinge geführt werden. Anschließend werden die Kunststoffvorformlinge mittels eines Übergabesterns an die Temperiereinrichtung 4 übergeben und von dieser wiederum in dem temperierten Zustand an eine Umformungseinrichtung 6, beispielsweise eine Blasformmaschine. In dieser Blasformmaschine werden hier Behältnisse mit einem von einem kreisförmigen Querschnitt abweichenden Querschnitt umgeformt bzw. streckgeblasen.

Fig. 6 zeigt eine weitere genauere Darstellung einer Anlage 50 zum Herstellen von Kunststoffbehältnissen. Dabei werden bei dieser Anlage 50 auch zusätzlich zunächst die Kunststoffvorformlinge mittes einer Herstellungseinrichtung 80 gefertigt und anschließend der Erwärmungseinrichtung 2 über eine Zuführeinrichtung 82 und einen sog. Eintaktstern 84 zugeführt. Der Eintaktstern vereinzelt die einzelnen Kunststoffvorformlinge bzw. bringt diese auf eine vorgegebene Teilung. Diese Erwärmungseinrichtung 2 weist eine Vielzahl von Heizelementen 22 auf, die hier stationär angeordnet sind, und an denen die Kunststoffvorformlinge vorbeigeführt werden. Dabei werden hier sämtliche Kunststoffvorformlinge einheitlich erwärmt.

Das Bezugszeichen 12 kennzeichnet eine Zuführeinrichtung, welche die Kunststoffvorformlinge an die Temperiereinrichtung 4 übergibt. Bei dieser Zuführeinrichtung 12 handelt es sich, wie oben erwähnt, um einen sogenannten Teilungsverzugsstern. Die Temperiereinrichtung weist einen um eine Drehachse D drehbaren Träger auf, an dem eine Vielzahl von Temperiereinheiten angeordnet ist. Das Bezugszeichen 49 kennzeichnet ein die Temperiereinrichtung 4 umgebendes Gehäuse. Die Umformungseinrichtung 6 weist ebenfalls einen drehbaren Träger 62 auf, an dem eine Vielzahl von Umformungsstationen 64 angeordnet ist. Das Bezugszeichen 66 kennzeichnet eine Steuerungseinrichtung zum Steuern der Umformungseinrichtung 6 und das Bezugszeichen 68 eine Abführeinrichtung zum Abführen der gefertigten Behältnisse. Das Bezugszeichen 70 kennzeichnet eine Steuerungseinrichtung zum Steuern der Erwärmungseinrichtung 4. Das Bezugszeichen 45 kennzeichnet eine Drehstellungserfassungseinrichtung, welche eine Drehstellung der Kunststoffvorformlinge bezüglich deren Längsrichtung erfasst.

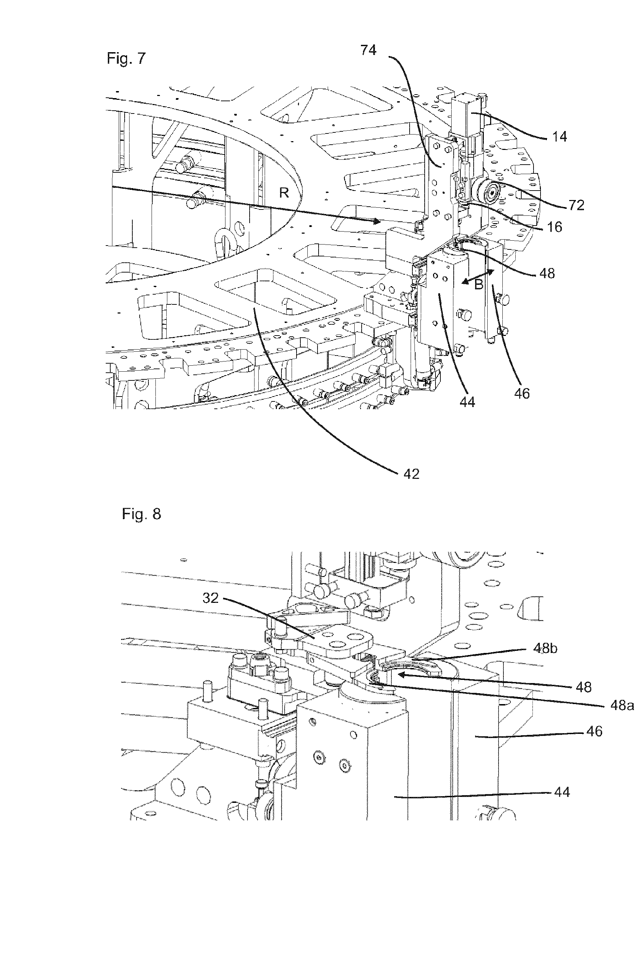

Fig. 7 zeigt eine Darstellung einer erfindungsgemäßen Vorrichtung zum Temperieren von Kunststoffvorformlingen. Auch diese Vorrichtung weist hier zwei Kontaktierungseinrichtungen 44 und 46 auf, wobei jedoch eine Zustellbewegung entlang des Pfeils B erfolgt, der hier im Wesentlichen senkrecht zu einer radialen Richtung R des Trägers 42 ist, an dem die Erwärmungseinheit 40 angeordnet ist. Das Bezugszeichen 48 kennzeichnet eine Halteeinrichtung, wie hier eine Greifklammer, welche zum Greifen des Kunststoffvorformlings dient. Während des Temperierprozesses wird daher der Kunststoffvorformling auch von dieser Greifklammer 48 gehalten. Diese Greifklammer 48 ist stationär gegenüber dem Träger 42 angeordnet bzw. ist abgesehen von ihrer eigentlichen Greifbewegung stationär.

Der Kunststoffvorformling wird in diese Greifeinrichtung 48 eingegeben und von dieser gehalten, bis ein Haltedorn 16 (d.h. die zweite Halteeinrichtung) in die Mündung dieses Kunststoffvorformlings eingeführt wurde. Der Kunststoffvorformling wird ggfs. bezüglich seiner Längsrichtung gedreht, um das Gewinde auszurichten und anschließend werden die Kontaktierungseinrichtungen 44 und 46 gleichförmig auf den Kunststoffvorformling zugestellt, um diesen an seinem Außenumfang bzw. seiner Aussenwandung zu temperieren. Zu dem Zweck des Einführens der zweiten Halteeinrichtung in die Mündung des Kunststoffvorformlings ist eine Führungsrolle 72 vorgesehen, welche eine Zustellung der zweiten Halteeinrichtung 16 auf den Kunststoffvorformling zu bewirkt.

Das Bezugszeichen 74 kennzeichnet einen Träger an dem die zweite Halteeinrichtung 16 angeordnet ist. Das Bezugszeichen 14 kennzeichnet eine Dreheinrichtung, wie einen Schrittmotor, der zum Drehen des Kunststoffvorformlings 10 bezüglich seiner Längsachse dient. Mittels dieser Dreheinrichtung 14 kann eine Ausrichtung der einzelnen Gewinde der Kunststoffvorformlinge erreicht werden.

Bei dem Verfahren wird der Kunststoffvorformling zunächst in horizontaler Richtung in die erste Halteeinrichtung 48 eingeführt und anschließend wird auch die zweite Halteeinrichtung 16 in die Mündung des Kunststoffvorformlings eingeführt. Auch eine Drehstellung des Gewindes des Kunststoffvorformlings kann nach dessen Übergabe in die erste Halteeinrichtung 48 erfasst werden. In dieser Position kann dann der Kunststoffvorformling bezüglich seiner Längsrichtung gedreht werden. Nach der Temperierung wird der Kunststoffvorformling wieder über einen (nicht gezeigten) Zwischenstern aus der Halteeinrichtung 48 entnommen. Die Halteeinrichtung 48 ist damit ein aktives Element, welches also aktiv geöffnet und geschlossen werden kann. Ein Öffnen kann beispielsweise erfolgen, um den Kunststoffvorformling bezüglich seiner Längsrichtung zu drehen.

Bevorzugt wird der Kunststoffvorformling derart in die Temperiereinrichtung eingegeben, dass sich zwischen dem Entnahmeort und dem Eingabeort ein (Umfangs)Winkel von mehr als 250°, bevorzugt von mehr als 270°und besonders bevorzugt von mehr als 290° ergibt. Mit anderen Worten wird der Kunststoffvorformling zwischen der Eingabe und der Entnahme um den genannten Umfangswinkel transportiert. Entlang dieses Prozesswinkels erfolgt damit eine Temperierung des Kunststoffvorformlings. Durch diesen vergleichsweise großen Prozesswinkel kann eine im Wesentlichen einheitliche Temperierung aller Kunststoffvorformlinge gefördert werden.

Im Einzelnen wird zunächst der Kunststoffvorformling aus dem in den Figuren 5 und 6 gezeigten Ofen entnommen, wobei dies bevorzugt mittels eines Teilungsverzugssterns erfolgt. Anschließend wird der erwärmte Kunststoffvorformling aus diesem Teilungsverzugsstern in die erste Halteeinrichtung 48 geführt, die, wie oben erwähnt, an dem Träger 42 und oberhalb der beiden Kontaktierungseinrichtungen 44 und 46 angeordnet ist. Anschließend wird die Halteeinrichtung 48 geschlossen, um den Kunststoffvorformling 10 zu halten. In einem weiteren Verfahrensschritt wird die zweite Halteeinrichtung 16 in die Mündung des Kunststoffvorformlings eingefahren, wobei dieses Einfahren in einer vertikalen Richtung (d.h. der Längsrichtung des Kunststoffvorformlings) erfolgt. Anschließend wird die Halteeinrichtung 48 geöffnet, sodass der Kunststoffvorformling nur noch von der zweiten Halteeinrichtung 16 gehalten wird. Falls nötig, wird der Kunststoffvorformling entsprechend seiner Ausrichtmarkierung gedreht. Auf diese Weise können genau vordefinierte Bereiche der Umfangswandung des Kunststoffvorformlings temperiert werden.

In einem weiteren Verfahrensschritt werden die beiden Kontaktierungseinrichtungen 44 und 46 geschlossen und temperieren Bereiche der Außenwandung des Kunststoffvorformlings.

In einem weiteren Verfahrensschritt werden die Kontaktierungseinrichtungen 44, 46 wieder geöffnet und der so mit einem Temperaturprofil versehene Kunststoffvorformling wird durch eine Entnahmeeinrichtung, bei der es sich insbesondere wiederum um einen Teilungsverzugsstern handelt, der Temperiereinrichtung entnommen. Anschließend wird der Kunststoffvorformling an die oben gezeigte Umformungseinrichtung 6 übergeben. Vor der Entnahme des Kunststoffvorformlings kann dabei die Halteeinrichtung 16 wieder aus der Mündung des Kunststoffvorformlings herausgezogen werden. Entsprechend kann hier auch die Klammer 48 wieder geschlossen werden, damit wiederum eine rein horizontale Übergabe des Kunststoffvorformlings an die nachfolgenden Transporteinrichtungen möglich ist.

Das Bezugszeichen B bezieht sich auf die Bewegungsrichtung der beiden Kontaktiereinrichtungen 44, 46. Man erkennt, dass diese Bewegungsrichtung B hier senkrecht zu der radialen Richtung R des Trägers 42 steht. Mit anderen Worten verläuft die Bewegungsrichtung B hier tangential zu dem Transportpfad der Kunststoffvorformlinge 10. Es wäre jedoch auch möglich, dass die beiden Kontaktiereinrichtungen 44, 46 hier etwas schräg gestellt sind, so dass die Kunststoffvorformling in seiner Transportrichtung "von hinten" zwischen die Kontaktiereinrichtungen eingeführt werden kann.

Fig. 8 zeigt eine Detaildarstellung der in Fig. 7 gezeigten Vorrichtung. Man erkennt, dass die Greifeinrichtung 48 zwei Klammerteile 48a und 48b aufweist. Das Bezugszeichen 32 kennzeichnet grob schematisch einen Antrieb, der zum Öffnen und Schließen der Greifeinrichtung 48 dient. Diese Klammer 48 ist dabei in ihrer Gesamtheit oberhalb der Kontaktierungseinrichtungen 44 und 46 angeordnet. Genauer gesagt ist ein Träger dieser Greifklammer 48 stationär gegenüber einem Träger der beiden Kontaktierungseinrichtungen 44 und 46 angeordnet.

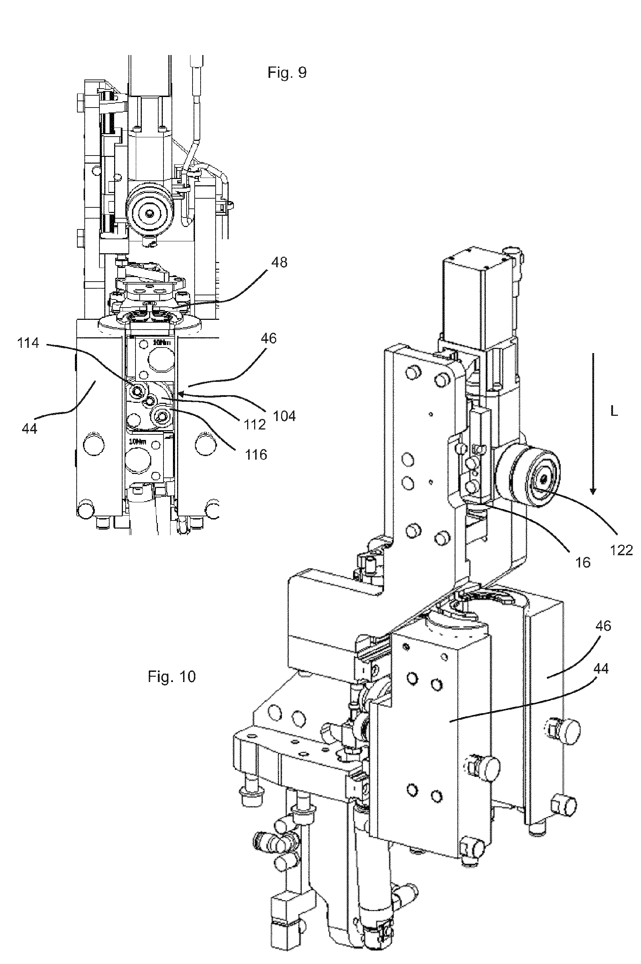

Fig. 9 zeigt eine vordere Ansicht einer erfindungsgemäßen Vorrichtung. Auch hier sind wieder die beiden Kontaktierungseinrichtungen 44 und 46 erkennbar, sowie auch die Greifklammer 48. Daneben ist auch eine in ihrer Gesamtheit mit 104 bezeichnete Kopplungseinrichtung vorgesehen, welche die Bewegung der ersten Kontaktierungseinrichtung 44 mit der Bewegung der zweiten Kontaktierungseinrichtung 46 koppelt. Diese Kopplungseinrichtung 104 weist dabei einen drehbaren Träger 112 auf, an den zwei Gelenkverbindungen 114 und 116 angelenkt sind. Diese beiden Gelenkverbindungen 114 und 116 stehen wiederum über (hier nicht dargestellte) Gestänge mit den Kontaktierungseinrichtungen 44 und 46 in Verbindung. Dabei wäre es möglich, dass der drehbare Träger 112 von einem Elektromotor angetrieben wird und somit bewirkt, dass über die Gestänge die Kontaktierungseinrichtungen 44 und 46 gleichförmig auseinanderbewegt bzw. zusammenbewegt würden. Es wäre jedoch auch möglich, dass mittels eines Linearmotors eine der beiden Kontaktierungseinrichtungen 44, 46 angetrieben wird und die Kopplungseinrichtung 104 diese Bewegung auch auf andere die Kontaktierungseinrichtung überträgt.

Fig. 10 zeigt eine weitere Darstellung einer erfindungsgemäßen Erwärmungseinheit. Hier ist auch die zweite Halteeinrichtung 16 erkennbar, bei der es sich hier um einen Dorn handelt, der in eine Mündung eines (nicht gezeigten) Kunststoffvorformlings einführbar ist. Diese Halteeinrichtung ist dabei in der Längsrichtung L des Kunststoffvorformlings bewegbar, um, wie gesagt, die Einführung in den Kunststoffvorformling bzw. dessen Mündung zu ermöglichen.

Das Bezugszeichen 122 kennzeichnet eine Führungsrolle, welche gegenüber einer (nicht gezeigten) Führungskurve abrollt, um so die Einführung der Halteeinrichtung 16 in den Kunststoffvorformling zu erreichen.

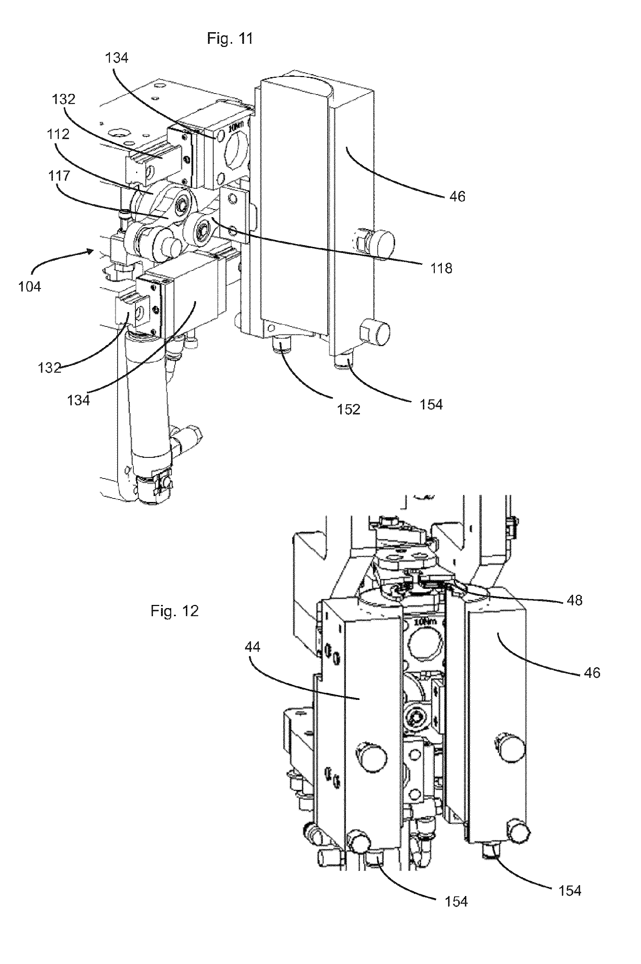

Fig. 11 zeigt eine weitere Teildarstellung der Kopplungseinrichtung 104. Hierbei sind auch die beiden stangenförmigen Körper 116 und 118 dargestellt, über welche die beiden Kontaktierungseinrichtungen 44 (nicht gezeigt) und 46 angelenkt sind. Die Bezugszeichen 132 kennzeichnen jeweils einen Träger, an dem ein Schlitten 134 verschiebbar gelagert ist. An diesen Schlitten ist wiederum die Kontaktierungseinrichtung 46 angeordnet. Dabei kann dieser Schlitten auch einen (linearmotorischen) Antrieb zum Bewegen der Kontaktierungseinrichtung 46 aufweisen.

Die Bezugszeichen 152 und 154 beziehen sich auf Anschlüsse, mit denen der Kontaktierungseinrichtung 46 ein fließfähiges Medium zuführbar ist, um die Kontaktierungseinrichtung 46 zu temperieren. Entsprechend weist die Kontaktierungseinrichtung 46 im Inneren Kanäle zum Leiten dieses flüssigen Mediums auf.

Fig. 12 zeigt wiederum eine vordere Ansicht einer erfindungsgemäßen Erwärmungseinheit. Hier sind wieder die beiden Kontaktierungseinrichtungen 44 und 46 erkennbar sowie ein Anschluss 154 zum Zuführen bzw. Abführen des fließfähigen Temperiermediums.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Erwärmungseinrichtung
- 4: Temperiereinrichtung / Erwärmungseinrichtung
- 6: Umformungseinrichtung
- 10: Kunststoffvorformling
- 10a: Gewinde / Mündung
- 12: Zuführeinrichtung
- 14: Dreheinrichtung
- 16: zweite Halteeinrichtung
- 22: Heizelemente
- 32: Antrieb
- 42: Träger
- 44, 46: Kontaktierungseinrichtungen
- 45: Drehstellungserfassungseinrichtung
- 48: Halteeinrichtung / Greifklammer
- 48a, b: Klammerteile
- 49: Gehäuse
- 50: Anlage
- 62: Träger
- 64: Umformungsstation
- 66: Steuerungseinrichtung
- 68: Abführeinrichtung
- 70: Steuerungseinrichtung
- 72: Führungsrolle
- 74: Träger
- 80: Herstellungseinrichtung
- 82: Zuführeinrichtung
- 84: Eintaktstern
- 104: Kopplungseinrichtung
- 112: drehbarer Träger
- 114, 116: Gelenkverbindungen
- 117, 118: stangenförmiger Körper
- 122: Führungsrolle
- 132: Träger
- 134: Schlitten
- 152, 154: Anschlüsse
- 412: drehbarer Träger
- 414: Zuführeinrichtung
- 420: Greifklammer
- 440: Temperiereinheit
- 444, 446: Kontaktierungseinrichtungen

- O: Öffnungsbewegung
- B: Zustellbewegung
- R: radiale Richtung
- L: Längsrichtung

## Patentansprüche

1. Temperiereinrichtung (4) zum Temperieren von Kunststoffvorformligen (10) wobei diese Temperiereinrichtung (4) wenigstens eine an einem um eine vorgegebene Drehachse (D) drehbaren Träger (42) angeordnete Temperiereinheit (40) aufweist und diese Temperiereinheit (4) wenigstens zwei Kontaktierungseinrichtungen (44, 46) aufweist, welche zum Kontaktieren einer Aussenwandung der Kunststoffvorformlinge (10) geeignet und bestimmt sind und zwischen denen wenigstens ein Abschnitt der Kunststoffvorformlinge aufnehmbar ist, und mit einer Antriebseinrichtung zum Bewegen der Kontaktierungseinrichtungen (44, 46)
**dadurch gekennzeichnet, dass**
die Antriebseinrichtung wenigstens eine Aktoreinrichtung aufweist, welche wenigstens eine Kontaktierungseinrichtung (44, 46) antreibt.

2. Temperiereinrichtung (4) nach Anspruch 1,
**dadurch gekennzeichnet, dass**
die Aktoreinrichtung aus einer Gruppe von Aktoreinrichtungen ausgewählt ist, welche elektrisch betätigte Aktoreinrichtungen, pneumatisch betätigte Aktoreinrichtungen und hydraulisch betätigte Aktoreinrichtungen enthält.

3. Temperiereinrichtung (4) nach wenigstens einem der vorangegangenen Ansprüche,
**dadurch gekennzeichnet, dass**
diese Kontaktiereinrichtungen (44, 46) bezüglich einander entlang einer vorgegebenen Richtung (B) bewegbar sind und die vorgegebene Richtung (B) gegenüber einer radialen Richtung (R) des Trägers (42) in einem von 0° verschiedenen Winkel verläuft.

4. Temperiereinrichtung (4) nach wenigstens einem der vorangegangenen Ansprüche,
**dadurch gekennzeichnet, dass**
eine Bewegung der ersten Kontaktierungseinrichtung (44) mit einer Bewegung der zweiten Kontaktierungseinrichtung (46) mittels einer Kopplungseinrichtung (104) gekoppelt ist.

5. Vorrichtung (1) nach Anspruch 4,
**dadurch gekennzeichnet, dass**
die Temperiereinrichtung (4) eine mechanische Kopplungseinrichtung (104) aufweist.

6. Vorrichtung (1) nach wenigstens einem der vorangegangenen Ansprüche,
**dadurch gekennzeichnet, dass**
die Aktoreinrichtung sowohl die Bewegung der ersten Kontaktierungseinrichtung (44) als auch die Bewegung der zweiten Kontaktierungseinrichtung (46) bewirkt.

7. Vorrichtung (1) nach Anspruch 4,
**dadurch gekennzeichnet, dass**
die Kopplungseinrichtung (104) ein Gestänge (117,118) aufweist.

8. Vorrichtung (1) nach Anspruch 4,
**dadurch gekennzeichnet, dass**
die Kopplungseinrichtung (104) einen drehbaren Träger (112) aufweist, an dem die Kontaktierungseinrichtungen (44, 46) über das Gestänge (117, 118) angelenkt sind.

9. Vorrichtung (1) nach wenigstens einem der vorangegangenen Ansprüche,
**dadurch gekennzeichnet, dass**
die Temperiereinrichtung eine erste Halteeinrichtung (48) zum Halten der Kunststoffvorformlinge (10) aufweist, wobei diese erste Halteeinrichtung (48) bevorzugt in der Längsrichtung der Kunststoffvorformlinge oberhalb der Kontaktierungseinrichtungen (44, 46) angeordnet ist und/oder (aktiv) schaltbar ist.

10. Vorrichtung (1) nach wenigstens einem der vorangegangenen Ansprüche,
**dadurch gekennzeichnet, dass**
die Kopplungseinrichtung (104) die Bewegung der ersten Kontaktierungseinrichtung (44) derart an die Bewegung der zweiten Kontaktierungseinrichtung (46) koppelt, dass sich die erste Kontaktierungseinrichtung (44) und die zweite Kontaktierungseinrichtung gleichförmig in entgegengesetzten Richtungen bewegen.

11. Vorrichtung (1) nach wenigstens einem der vorangegangenen Ansprüche,
**dadurch gekennzeichnet, dass**
die Kopplungseinrichtung (104) innerhalb eines Transportpfads angeordnet ist, entlang dessen die Kunststoffvorformlinge (10) mittels der Temperiereinheit (40) transportiert werden.

12. Vorrichtung (1) nach wenigstens einem der vorangegangenen Ansprüche,
**dadurch gekennzeichnet, dass**
die Bewegungen der ersten Kontaktierungseinrichtung (44) und der zweiten Kontaktierungseinrichtung (46) derart gekoppelt sind, dass sich die Kontaktierungseinrichtungen in einer Richtung bewegen, die mit der radialen Richtung des Hauptträgers einen von 0° verschiedenen Winkel einschließen.

13. Vorrichtung (1) nach wenigstens einem der vorangegangenen Ansprüche,
**dadurch gekennzeichnet, dass**
ein Öffnungshub zwischen den Kontaktierungseinrichtungen (44, 46) kleiner ist als 70mm.

14. Vorrichtung (1) nach wenigstens einem der vorangegangenen Ansprüche,
**dadurch gekennzeichnet, dass**
wenigstens eine Kontaktierungseinrichtung form- und/oder kraftschlüssig an einem Träger befestigt ist.

15. Vorrichtung (1) nach wenigstens einem der vorangegangenen Ansprüche,
**dadurch gekennzeichnet, dass**
die Temperiereinrichtung eine Antriebseinrichtung und bevorzugt einen Schrittmotor zum Drehen der Kunststoffvorformlinge bezüglich deren Längsrichtungen aufweist.
